# EUROPÄISCHE PATENTSCHRIFT

(11) **EP 3 283 767 B1**
(45) Veröffentlichungstag und Bekanntmachung des Hinweises auf die Patenterteilung: **26.09.2018**
(21) Anmeldenummer: 16716596.8
(22) Anmeldetag: 15.04.2016
(51) Int. Cl.: F04B 39/00, F04B 39/12

(54) **KÄLTEMITTELVERDICHTER**
REFRIGERANT COMPRESSOR
COMPRESSEUR À RÉFRIGÉRANT

(30) Priorität: 15.04.2015 AT 500622015 U
(43) Veröffentlichungstag der Anmeldung: 21.02.2018
(73) Patentinhaber: Nidec Global Appliance Germany GmbH, 24939 Flensburg (DE)
(72) Erfinder: BRUNE, Fabian, 24937 Flensburg (DE); STEEN, Helge, 24782 Büdelsdorf (DE)
(74) Vertreter: KLIMENT & HENHAPEL
(86) Internationale Anmeldenummer: PCT/EP2016/058397
(87) Internationale Veröffentlichungsnummer: WO 2016/166320

(56) Entgegenhaltungen:
- WO-A1-2006/053526
- WO-A1-2015/013793
- DE-A1- 3 832 565
- DE-A1-102010 051 300
- DE-A1-102011 056 587
- US-A1- 2004 170 508

## Beschreibung

### GEBIET DER ERFINDUNG

Die vorliegende Erfindung betrifft einen Kältemittelverdichter umfassend ein hermetisch dichtes Gehäuse sowie eine im Inneren des Gehäuses angeordnete Antriebseinheit mit einer Kolben-Zylinder-Einheit zur zyklischen Verdichtung eines Kältemittels und einem Elektromotor zum Antrieb der Kolben-Zylinder-Einheit, wobei eine Dämpfungsvorrichtung zur Dämpfung und Begrenzung einer Auslenkung der Antriebseinheit im Inneren des Gehäuses vorgesehen ist, die Dämpfungsvorrichtung umfassend ein inneres Element, welches mit der Antriebseinheit verbunden ist, und ein äußeres Element, welches das innere Element umgibt, wobei im Gehäuse ein durch mindestens ein Wandelement zumindest abschnittsweise begrenztes Bewegungsvolumen vorgesehen ist, in welchem das innere Element und das äußere Element angeordnet sind, wobei in einem ersten Zustand der Antriebseinheit zumindest das innere Element im Bewegungsvolumen bewegbar ist und wobei in einem zweiten, ausgelenkten Zustand der Antriebseinheit das innere Element unter Zwischenlage und elastischer Verformung des äußeren Elements gegen das mindestens eine Wandelement gedrückt ist.

### STAND DER TECHNIK

Bei Kältemittelverdichtern, welche ein hermetisch dichtes Gehäuse sowie eine im Inneren des Gehäuses angeordnete Antriebseinheit mit einer Kolben-Zylinder-Einheit zur zyklischen Verdichtung eines Kältemittels und einem Elektromotor zum Antrieb der Kolben-Zylinder-Einheit umfassen, treten insbesondere bei Start- und Stoppvorgängen relativ große Kräfte auf, die zu entsprechend relativ großen Auslenkungen der Antriebseinheit im Gehäuse führen. Dabei ist die Antriebseinheit zur Vibrationsdämpfung üblicherweise über Federelemente an das Gehäuse angebunden, die die Auslenkung der Antriebseinheit zulassen. Insbesondere bei Kältemittelverdichtern mit variabler Drehzahl müssen die Federelemente aufgrund der im Betrieb auftretenden niedrigen Drehzahlen relativ weich ausgelegt sein, was wiederum größere Auslenkungen der Antriebseinheit zur Folge hat. Um hierbei ein Anschlagen der Antriebseinheit am Gehäuse zu vermeiden, ist eine Dämpfungsvorrichtung vorgesehen.

Diese Dämpfungsvorrichtung weist gemäß dem Stand der Technik eine im Gehäuseinneren angeordnete und mit dem Gehäuse starr verbundene - typischerweise mit dem Gehäuse verschweißte - Kappe auf, die ein Bewegungsvolumen definiert. In der Kappe ist eine spiralförmige Metallfeder befestigt. In einem lichten Querschnitt der Metallfeder ist ein Metallbolzen angeordnet, der mit der Antriebseinheit starr verbunden ist. Der Metallbolzen kann sich innerhalb des lichten Querschnitts in einem gewissen Bereich bewegen, ohne die Metallfeder zu berühren. Im normalen Betrieb ermöglicht dies eine gewisse Auslenkung der Antriebseinheit. Bei sehr großen Auslenkungen, wie sie insbesondere bei Start- und Stoppvorgängen auftreten, touchiert der Bolzen die Feder, wodurch diese elastisch verformt und gegen die Kappe gedrückt wird. Dies dämpft und begrenzt die Auslenkung der Antriebseinheit.

Nachteilig hierbei ist die relativ große Lärmentwicklung. Hierzu trägt der Kontakt von Metall auf Metall durch die Kontaktierung der Feder durch den Bolzen bei. Zudem wird der Schall sehr gut auf die Kappe und von der Kappe auf das Gehäuse übertragen. Der so generierte Lärm wird vom Benutzer subjektiv als störend wahrgenommen.

Das Dokument DE 10 2010 051300 offenbart die Merkmale des Oberbegriffs des Anspruchs 1, wobei die Bewegung des inneren Begrenzungselements, welches mit der Antriebseinheit verbunden ist, durch eine Feder gegenüber dem Wandelement begrenzt wird.

### AUFGABE DER ERFINDUNG

Es ist daher Aufgabe der vorliegenden Erfindung, einen Kältemittelverdichter zur Verfügung zu stellen, der die oben genannten Nachteile vermeidet. Insbesondere soll der erfindungsgemäße Kältemittelverdichter störende Lärmentwicklung, wie sie vorzugsweise bei Start- und Stoppvorgängen von Kältemittelverdichtern mit variabler Drehzahl auftritt, vermeiden oder zumindest minimieren.

### DARSTELLUNG DER ERFINDUNG

Kern der Erfindung ist es, die Dämpfungseigenschaften weiter zu verbessern und dabei insbesondere metallische Geräusche zu vermeiden, indem ein Dämpfungselement aus einem Polymerwerkstoff oder aus vulkanisiertem Kautschukvorgesehen ist. Dabei ist unter einem Polymerwerkstoff ein Werkstoff bzw. Kunststoff gemäß DIN 7724 zu verstehen, was Duroplaste, Elastomere, Thermoplaste sowie thermoplastische Elastomere umfasst. Aus dem Gesagten ergibt sich, dass auch Gummi, der sowohl aus einem natürlichen als auch aus einem synthetischen Material hergestellt sein kann, als Material für das Dämpfungselement in Frage kommt. Das Dämpfungselement umgibt als äußeres Element ein inneres Element, welches wiederum mit der Antriebseinheit verbunden ist. Das innere Element kann - muss aber nicht - wesentlich steifer als das äußere Element sein. Entsprechend ist es bei einem Kältemittelverdichter umfassend ein hermetisch dichtes Gehäuse sowie eine im Inneren des Gehäuses angeordnete Antriebseinheit mit einer Kolben-Zylinder-Einheit zur zyklischen Verdichtung eines Kältemittels und einem Elektromotor zum Antrieb der Kolben-Zylinder-Einheit, wobei eine Dämpfungsvorrichtung zur Dämpfung und Begrenzung einer Auslenkung der Antriebseinheit im Inneren des Gehäuses vorgesehen ist, die Dämpfungsvorrichtung umfassend ein inneres Element, welches mit der Antriebseinheit verbunden ist, und ein äußeres Element, welches das innere Element umgibt, wobei im Gehäuse ein durch mindestens ein Wandelement zumindest abschnittsweise begrenztes Bewegungsvolumen vorgesehen ist, in welchem das innere Element und das äußere Element angeordnet sind, wobei in einem ersten Zustand der Antriebseinheit zumindest das innere Element im Bewegungsvolumen bewegbar ist und wobei in einem zweiten, ausgelenkten Zustand der Antriebseinheit das innere Element unter Zwischenlage und elastischer Verformung des äußeren Elements gegen das mindestens eine Wandelement gedrückt ist, erfindungsgemäß vorgesehen, dass das äußere Element aus einem Polymerwerkstoff oder vulkanisiertem Kautschuk gefertigt ist. Hierbei spielt es keine Rolle, ob das äußere Element am mindestens einen Wandelement fixiert ist oder nicht.

Weiterhin kann auch die Ausbildung des mindestens einen Wandelements auf unterschiedlichste Arten erfolgen. Eine Möglichkeit besteht darin, auf Kappen zurückzugreifen, was produktionstechnisch und damit im Hinblick auf die Kosten besonders günstig sein kann. Daher ist es bei einer bevorzugten Ausführungsform des erfindungsgemäßen Kältemittelverdichters vorgesehen, dass das mindestens eine Wandelement Teil einer im Gehäuse angeordneten und mit diesem starr verbundenen Kappe ist. Die Verwendung von Kappen ist auch insoweit vorteilhaft, da dies eine flexiblere Formgebung des Gehäuses ermöglicht, solange sichergestellt ist, dass mindestens eine Kappe oder mehrere Kappen im Gehäuse angeordnet und mit diesem im Wesentlichen starr verbunden werden können. Vorzugsweise ist die mindestens eine Kappe mit dem Gehäuse verschweißt.

Um eine besonders einfach zu realisierende Ausführungsvariante zu ermöglichen, ist es bei einer bevorzugten Ausführungsform des erfindungsgemäßen Kältemittelverdichters vorgesehen, dass das äußere Element am mindestens einen Wandelement fixiert ist. Insbesondere kann das äußere Element dabei an der Kappe fixiert sein. Das innere Element kann sich in diesem Fall im normalen Betrieb in einem Bereich, der vom äußeren Element umgeben ist frei bewegen, entsprechend den Auslenkungen der Antriebseinheit. Erst bei sehr großen Auslenkungen berührt das innere Element das äußere Element und verformt dieses durch Druck gegen das Wandelement, insbesondere gegen die Kappe.

Um eine progressive Dämpfung zu erreichen, ist es bei einer bevorzugten Ausführungsform des erfindungsgemäßen Kältemittelverdichters vorgesehen, dass das äußere Element eine dem inneren Element zugewandte Innenseite aufweist, die einen lichten Querschnitt des äußeren Elements begrenzt, und dass sich der lichte Querschnitt parallel zu einer Längsachse des äußeren Elements gesehen zumindest abschnittsweise verjüngt. Die Verjüngung bewirkt, dass das innere Element bei sehr großen Auslenkungen der Antriebseinheit zunächst nur einen Teil des äußeren Elements kontaktiert, nämlich jenen Teil, der den geringsten lichten Querschnitt aufweist. Entsprechend wird durch das innere Element zunächst nur dieser Teil des äußeren Elements elastisch verformt. Reicht dies nicht aus, um die Auslenkung der Antriebseinheit zu begrenzen, so kommt es bei einer gesteigerten Auslenkung zu einer Kontaktierung von weiteren, den lichten Querschnitt begrenzenden Teilen des äußeren Elements durch das innere Element. Je mehr Teile kontaktiert werden, umso größer ist die notwendige Kraft zur weiteren Verformung des äußeren Elements durch das innere Element, was die progressive Dämpfung bewirkt. Liegt keine Auslenkung der Antriebseinheit vor, so ist die Längsachse des äußeren Elements vorzugsweise parallel zu einer Längsachse des inneren Elements.

Um ein besonders gleichmäßiges und sanftes Ansprechen der progressiven Dämpfung zu ermöglichen, ist es bei einer bevorzugten Ausführungsform des erfindungsgemäßen Kältemittelverdichters vorgesehen, dass sich der lichte Querschnitt parallel zur Längsachse und in Richtung eines auf der Längsachse liegenden Zentrums des äußeren Elements gesehen verjüngt und in entgegengesetzter Richtung gesehen vergrößert. Vorzugsweise fällt das Zentrum des äußeren Elements mit dem Zentrum des Bewegungsvolumens zusammen, sodass der lichte Querschnitt mit der geringsten Größe im Zentrum des Bewegungsvolumens angeordnet ist. Weiterhin kann durch die genannte Formgebung des lichten Querschnitts ein besonders gleichmäßiges Dämpfungsverhalten gewährleistet werden, auch wenn die Längsachse des inneren Elements nicht parallel zur Längsachse des äußeren Elements verläuft. Letzteres kann z.B. dann auftreten, wenn es zu einer, vorzugsweisen geringfügigen, Drehung der Antriebseinheit im Zuge von deren Auslenkung kommt.

Um eine besonders einfache Herstellung des äußeren Elements mit sich verjüngendem lichten Querschnitt zu ermöglichen, ist es bei einer bevorzugten Ausführungsform des erfindungsgemäßen Kältemittelverdichters vorgesehen, dass sich der lichte Querschnitt stufenweise verjüngt.

Um eine stabile Zwischenlage des äußeren Elements zwischen dem inneren Element und dem mindestens einen Wandelement zu ermöglichen und gleichzeitig eine einfache und stabile Fixierung des äußeren Elements am mindestens einen Wandelement gewährleisten zu können, ist es bei einer bevorzugten Ausführungsform des erfindungsgemäßen Kältemittelverdichters vorgesehen, dass das äußere Element eine das innere Element abschnittsweise umgebende und dem inneren Element abgewandte Außenseite aufweist, welche zumindest abschnittsweise am mindestens einen Wandelement fixiert ist.

Bei einer bevorzugten Ausführungsform des erfindungsgemäßen Kältemittelverdichters ist es vorgesehen, dass das äußere Element eine das innere Element abschnittsweise umgebende und dem inneren Element abgewandte Außenseite aufweist, welche Außenseite im ersten Zustand der Antriebseinheit das mindestens eine Wandelement abschnittsweise kontaktiert und abschnittsweise vom mindestens einen Wandelement beabstandet ist. Indem die Außenseite nicht vollständig am mindestens einen Wandelement anliegt, kann die Dämpfung in einer Anfangsphase relativ weich gestaltet werden. Die Beabstandung bietet nämlich Platz dafür, dass sich das äußere Element bei einer gewissen Größe der Auslenkungen der Antriebseinheit zunächst ohne Kontaktierung des mindestens einen Wandelements verformen kann, was zunächst eine relativ geringe Dämpfung bewirkt. Erst bei größeren Auslenkungen wird das äußere Element gegen das mindestens eine Wandelement gedrückt, was eine stärkere Dämpfung bewirkt.

Bei einer bevorzugten Ausführungsform des erfindungsgemäßen Kältemittelverdichters ist es vorgesehen, dass das äußere Element eine das innere Element abschnittsweise umgebende und dem inneren Element abgewandte Außenseite aufweist, welche Außenseite mit dem mindestens einen Wandelement parallel zur Längsachse gesehen nur abschnittsweise überlappt. Hierdurch kann in bestimmten Situationen ein besonders weiches Ansprechverhalten der Dämpfung realisiert werden, wenn das innere Element zunächst nur jenen Teil des äußeren Elements kontaktiert, der nicht mit dem mindestens einen Wandelement parallel zur Längsachse gesehen überlappt, da dieser Teil des äußeren Elements nicht gegen die Wand gedrückt werden kann. Freilich kann es trotzdem zu einer elastischen Verformung dieses Teils des äußeren Elements kommen, die eine geringe Dämpfung der entsprechenden Auslenkung der Antriebseinheit bewirkt. In weiterer Folge kann es bei noch größeren Auslenkungen dazu kommen, dass dann auch jene Teile des äußeren Elements durch das innere Element kontaktiert und von diesem elastisch verformt werden, die mit dem mindestens einen Wandelement parallel zur Längsachse gesehen überlappen, was zu einer stärkeren Dämpfung und einer stärkeren Begrenzung der Auslenkung der Antriebseinheit führt. Insgesamt kann also wieder eine progressive Dämpfungscharakteristik erzielt werden.

Bei einer bevorzugten Ausführungsform des erfindungsgemäßen Kältemittelverdichters ist es vorgesehen, dass das mindestens eine Wandelement Teil einer Gehäusewand des Gehäuses ist. In diesem Fall sind keine zusätzlichen Bauteile, insbesondere keine Kappen zur Ausbildung des mindestens einen Wandelements notwendig. Neben der prinzipiellen Eleganz dieser Lösung, kann das Gehäuse in diesem Fall auch besonders kompakt gehalten werden, da keine zusätzlichen Kappen untergebracht werden müssen, was für Anwendungen mit beengten Platzverhältnissen von Vorteil sein kann. Es muss lediglich sichergestellt sein, dass die Gehäusewand abschnittsweise geeignet geformt ist, um das Bewegungsvolumen zumindest abschnittsweise zu begrenzen. Weiterhin bietet diese Lösung aufgrund der reduzierten Teile natürlich auch ein nicht zu unterschätzendes Kosteneinsparungspotential.

Bei einer bevorzugten Ausführungsform des erfindungsgemäßen Kältemittelverdichters ist es vorgesehen, dass das äußere Element am inneren Element fixiert ist. Dabei kann das mindestens eine Wandelement von der Kappe ausgebildet sein. Vorzugsweise ist das mindestens eine Wandelement durch die Gehäusewand ausgebildet. Entsprechend liegt ein Vorteil in der Fixierung des äußeren Elements am inneren Element darin, dass dies bei unterschiedlichsten Ausführungsvarianten des mindestens einen Wandelements universell anwendbar ist. Weiters kann jene Fläche des äußeren Elements, welche zur Dämpfung der Auslenkung der Antriebseinheit eine elastische Verformung erfährt und/oder mit der das äußere Element das mindestens eine Wandelement zur Dämpfung der Auslenkung der Antriebseinheit kontaktiert, besonders groß gestaltet werden, was eine sehr starke und effektive Dämpfung der Auslenkung der Antriebseinheit erlaubt.

Weiterhin kann durch die Befestigung des äußeren Elements am inneren Element stets eine maximale Kontaktfläche zwischen den beiden Elementen garantiert werden, was ebenso zu einer sehr starken und effektiven Dämpfung der Auslenkung der Antriebseinheit beiträgt. Entsprechend ist es bei einer bevorzugten Ausführungsform des erfindungsgemäßen Kältemittelverdichters vorgesehen, dass das äußere Element eine dem inneren Element zugewandte Innenseite aufweist, welche vollständig vom inneren Element kontaktiert ist.

Um das elastische Verhalten des äußeren Elements im Sinne eines feineren bzw. weicheren Ansprechens der Dämpfung zu verbessern, ist es bei einer bevorzugten Ausführungsform des erfindungsgemäßen Kältemittelverdichters vorgesehen, dass das äußere Element Lamellen aufweist, welche im zweiten Zustand der Antriebseinheit das mindestens eine Wandelement kontaktieren. D.h. zunächst findet bei hinreichend großen Auslenkungen der Antriebseinheit eine elastische Verformung einzelner Lamellen statt, womit ein sanftes Ansprechen der Dämpfung ermöglicht wird. Erst bei noch größeren Auslenkungen kann es zu einer elastischen Verformung restlicher Teile des äußeren Elements, welche keine Lamellen aufweisen, insbesondere eines Grundkörpers des äußeren Elements, kommen, was eine stärkere Dämpfung bewirkt. Insgesamt kann wieder eine progressive Dämpfungscharakteristik erzielt werden. Dabei ist es zur Verstärkung der progressiven Dämpfungscharakteristik vorzugsweise vorgesehen, dass eine Einhüllende des äußeren Elements zumindest abschnittsweise vom mindestens einen Wandelement weg weisend gekrümmt ist.

Um eine besonders einfache Herstellung der Lamellen zu ermöglichen, ist es bei einer bevorzugten Ausführungsform des erfindungsgemäßen Kältemittelverdichters vorgesehen, dass die Lamellen normal zur Längsachse von einem Grundkörper des äußeren Elements abstehen.

Insbesondere sind auch Ausführungsvarianten möglich, bei denen das innere Element und das äußere Element einstückig und damit aus demselben Material gefertigt sind. Das äußere Element und das innere Element weisen dann natürlich grundsätzlich dieselbe Steifigkeit auf. Entsprechend ist es bei einer bevorzugten Ausführungsform des erfindungsgemäßen Kältemittelverdichters vorgesehen, dass das äußere Element und das innere Element einstückig ausgeführt sind.

Um einen besonders einfachen Zusammenbau des Kältemittelverdichters, insbesondere der Dämpfungsvorrichtung zu ermöglichen und außerdem eine lange Lebensdauer, insbesondere des äußeren Elements sicherzustellen, ist es bei einer bevorzugten Ausführungsform des erfindungsgemäßen Kältemittelverdichters vorgesehen, dass das äußere Element einstückig ausgeführt ist.

Um die Auslenkung der Antriebseinheit besonders direkt übertragen und dämpfen zu können, ist es bei einer bevorzugten Ausführungsform des erfindungsgemäßen Kältemittelverdichters vorgesehen, dass das innere Element aus Metall gefertigt ist. Gleichzeitig wird hierdurch eine hohe Stabilität und Lebensdauer des inneren Elements garantiert. Vorzugsweise ist das innere Element dabei als Bolzen ausgeführt. Besonders bevorzugt ist das innere Element in einem Block der Antriebseinheit fixiert, welcher als Zusatzmasse der Antriebseinheit fungiert, um die Frequenz von Eigenschwingungen der Antriebseinheit zu erniedrigen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittansicht durch einen Kältemittelverdichter gemäß dem Stand der Technik
- Fig. 2 bis Fig. 7: jeweils eine schematische Schnittdarstellung durch eine Dämpfungsvorrichtung unterschiedlicher Ausführungsformen eines erfindungsgemäßen Kältemittelverdichters, wobei ein äußeres Element der Dämpfungsvorrichtung an einem Wandelement fixiert ist
- Fig. 8: eine schematische Schnittdarstellung durch eine Dämpfungsvorrichtung einer Ausführungsform eines erfindungsgemäßen Kältemittelverdichters, wobei das äußere Element an einem inneren Element der Dämpfungsvorrichtung fixiert ist
- Fig. 9: eine schematische Schnittdarstellung durch eine Dämpfungsvorrichtung einer Ausführungsform eines erfindungsgemäßen Kältemittelverdichters, wobei das äußere Element an einem inneren Element der Dämpfungsvorrichtung fixiert ist und wobei keine Kappe vorgesehen ist
- Fig. 10: eine schematische Schnittdarstellung durch eine Dämpfungsvorrichtung einer Ausführungsform eines erfindungsgemäßen Kältemittelverdichters, wobei das äußere Element sowohl am inneren Element der Dämpfungsvorrichtung als auch an einem Wandelement fixiert ist.
- Fig. 11: eine Ansicht analog zu Fig. 10, wobei das innere Element jedoch in einem ausgelenkten Zustand dargestellt ist

### WEGE ZUR AUSFÜHRUNG DER ERFINDUNG

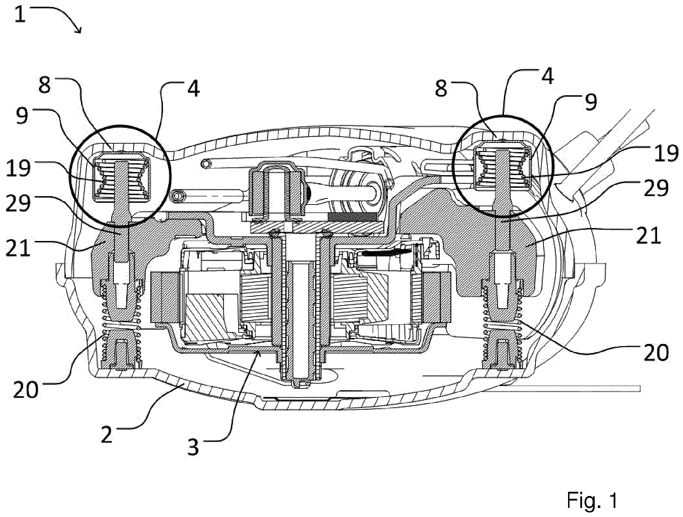

In der Schnittansicht der Fig. 1 ist ein Kältemittelverdichter 1 gemäß dem Stand der Technik dargestellt, wobei es sich insbesondere um einen Kältemittelverdichter 1 mit variabler Drehzahl handelt. Der Kältemittelverdichter 1 weist ein hermetisch dichtes Gehäuse 2 auf sowie eine im Inneren des Gehäuses 2 angeordnete Antriebseinheit 3 mit einer Kolben-Zylinder-Einheit zur zyklischen Verdichtung eines Kältemittels und einem Elektromotor zum Antrieb der Kolben-Zylinder-Einheit. Die Antriebseinheit 3 ist zur Vibrationsdämpfung mittels Federelementen 20 an das Gehäuse 2 angebunden, sodass es, insbesondere bei Start- und Stoppvorgängen, zu Auslenkungen der Antriebseinheit 3 kommen kann. Um hierbei ein Anschlagen der Antriebseinheit 3 am Gehäuse 2 zu vermeiden, sind Dämpfungsvorrichtungen 4 im Inneren des Gehäuses 2 vorgesehen.

Gemäß dem Stand der Technik umfasst jede Dämpfungsvorrichtung 4 eine Kappe 9, die mit dem Gehäuse 2 bzw. einer Gehäusewand 8 starr verbunden, vorzugsweise verschweißt ist. In jeder Kappe 9 ist eine spiralförmige Metallfeder 19 befestigt. In einem lichten Querschnitt der jeweiligen Metallfeder 19 ist ein Bolzen 29, vorzugsweise aus Metall, angeordnet, der mit der Antriebseinheit 3 im Wesentlichen starr verbunden ist.

Jede Bewegung bzw. Auslenkung der Antriebseinheit 3 bewirkt also eine entsprechende Auslenkung des Bolzens 29. Bevorzugt ist der Bolzen 29 in einem Block 21 der Antriebseinheit 3 fixiert, welcher als Zusatzmasse der Antriebseinheit 3 fungiert, um die Frequenz von Eigenschwingungen der Antriebseinheit 3 zu erniedrigen.

Der Bolzen 29 kann sich innerhalb des lichten Querschnitts in einem gewissen Bereich bewegen, ohne die Metallfeder 19 zu berühren. Im normalen Betrieb ermöglicht dies eine gewisse Auslenkung der Antriebseinheit 3. Bei sehr großen Auslenkungen, wie sie insbesondere bei Start- und Stoppvorgängen auftreten, touchiert der Bolzen 29 die Metallfeder 19, wodurch diese elastisch verformt und gegen die Kappe 9 gedrückt wird. Dies dämpft und begrenzt die Auslenkung der Antriebseinheit 3, hat aber gleichzeitig eine unerwünschte Lärmentwicklung mit störenden metallischen Geräuschen zur Folge.

Zur Reduzierung der Lärmentwicklung weist ein erfindungsgemäßer Kältemittelverdichter 1 Dämpfungsvorrichtungen 4 auf, die jeweils ein äußeres Element 6 aus einem Polymerwerkstoff oder vulkanisiertem Kautschuk, insbesondere aus Gummi umfassen. Die Dämpfungsvorrichtung 4 des erfindungsgemäßen Kältemittelverdichters 1 weist außerdem ein inneres Element 5 auf, das mit der Antriebsvorrichtung 3 verbunden und vom Dämpfungselement 6 umgeben ist. Das innere Element 5 kann eine höhere Steifigkeit als das Dämpfungselement 6 aufweisen und kann beispielsweise als Bolzen oder Stift, insbesondere aus Metall, ausgeführt sein. Vorzugsweise ist das innere Element 5 im Block 21 der Antriebseinheit 3 fixiert.

Das äußere Element 6 und das innere Element 5 sind in einem Bewegungsvolumen 7 angeordnet, welches zumindest abschnittsweise durch mindestens ein Wandelement begrenzt ist. In einem ersten Zustand der Antriebseinheit 3, die dem normalen Betriebszustand entspricht, ist zumindest das innere Element 5 im Bewegungsvolumen 7 bewegbar. In einem zweiten ausgelenkten Zustand der Antriebseinheit 3, der einer relativ großen Auslenkung der Antriebseinheit 3 entspricht, ist auch das innere Element 5 entsprechend weit ausgelenkt und drückt gegen das mindestens eine Wandelement, unter Zwischenlage und elastischer Verformung des äußeren Elements 6.

Unabhängig von der Materialwahl des inneren Elements 5 sowie des mindestens einen Wandelements wird durch das Material des äußeren Elements 6 jedenfalls ein Kontakt von Metall auf Metall im zweiten Zustand unterbunden. Weiters wird durch das sich elastisch verformende Material des äußeren Elements 6 eine exzellente Dämpfung der Auslenkung der Antriebseinheit 3 erzielt. Insgesamt kann somit ein Anschlagen der Antriebseinheit 3 am Gehäuse 2 vermieden und eine störende Lärmentwicklung, insbesondere bei Start- und/oder Stoppvorgängen drastisch reduziert werden.

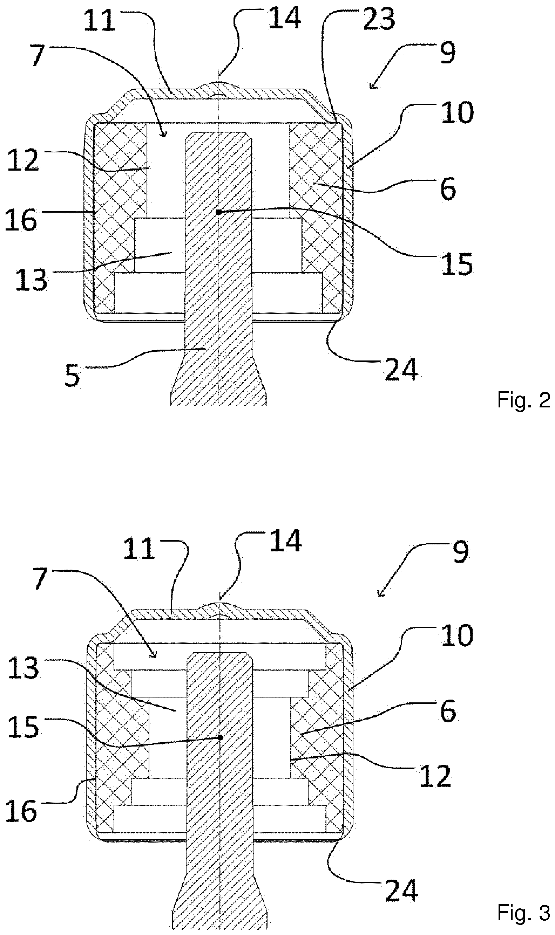

In der schematischen Schnittansicht der Fig. 2 ist eine Dämpfungsvorrichtung 4 einer Ausführungsform des erfindungsgemäßen Kältemittelverdichters 1 gezeigt, bei welcher die Dämpfungsvorrichtung 4 eine Kappe 9 umfasst, welche mit dem Gehäuse 2 bzw. der Gehäusewand 8 starr verbunden, vorzugsweise verschweißt ist. Das mindestens eine Wandelement, welches das Bewegungsvolumen 7 zumindest abschnittsweise begrenzt, wird in diesem Fall also durch mindestens eine das äußere Element 6 umschließende Seitenwand 10 der Kappe 9 sowie durch eine Kopfwand 11 der Kappe 9 gebildet. Im gezeigten Ausführungsbeispiel ist das äußere Element 6 an der mindestens einen Seitenwand 10 und/oder an der Kopfwand 11 fixiert, beispielsweise durch Verklebung. Die Seitenwand 10 und Kopfwand 11 können grundsätzlich einstückig ausgeführt sein. Vorzugsweise ist das äußere Element 6 insbesondere mit einer das innere Element 5 abschnittsweise umgebenden Außenseite 16, die vom inneren Element 5 weg weist, an der mindestens einen Seitenwand 10 fixiert.

Das äußere Element 6 weist eine dem inneren Element 5 zugewandte Innenseite 12 auf, die einen lichten Querschnitt 13 des äußeren Elements 6 begrenzt. Wie in Fig. 2 ersichtlich ist, verjüngt sich der lichte Querschnitt 13 in einer Richtung parallel zu einer Längsachse 14 des äußeren Elements 6 gesehen. Hierdurch wird eine progressive Dämpfungscharakteristik erreicht, da bei hinreichend großen Auslenkungen der Antriebseinheit zunächst nur ein Teil der Innenseite 12 bzw. des äußeren Elements 6 durch das innere Element 5 kontaktiert, gegen die Seitenwand 10 gedrückt und elastisch verformt wird. Erst bei größeren Auslenkungen werden weitere Teile der Innenseite 12 bzw. des äußeren Elements 6 durch das innere Element 5 kontaktiert und gegen die Seitenwand 10 gedrückt, wobei zu deren elastischer Verformung ein erhöhter Kraftaufwand notwendig ist, was die progressive Dämpfung bewirkt.

Zur einfachen Herstellung ist die Verjüngung des lichten Querschnitts 13 stufenweise ausgeführt. Die geringste Größe des lichten Querschnitts 13 ist bei der Ausführungsform der Fig. 2 in einem Zentrum 15 des äußeren Elements 6 angeordnet, welches auf der Längsachse 14 liegt und mit einem Zentrum des Bewegungsvolumens 7 zusammenfällt. Insgesamt sind Stufen mit drei unterschiedlichen Größen des lichten Querschnitts 13 bzw. mit drei unterschiedlichen Abständen der Innenseite 12 von der Längsachse 14 erkennbar.

Fig. 3 zeigt eine weitere Ausführungsform des erfindungsgemäßen Kältemittelverdichters 1, wobei dessen Dämpfungsvorrichtung 4 grundsätzlich analog zum Ausführungsbeispiel der Fig. 2 aufgebaut ist. In diesem Fall ist es jedoch so, dass sich der lichte Querschnitt 13 parallel zur Längsachse 14 und in Richtung Zentrum 15 gesehen verjüngt und in entgegengesetzter Richtung gesehen vergrößert. Hierdurch wird ein sanftes und gleichmäßiges Ansprechen der progressiven Dämpfung erzielt, auch wenn eine Längsachse 28 des inneren Elements 5 nicht parallel zur Längsachse 14 des äußeren Elements 6 verlaufen sollte. Letzteres kann z.B. dann auftreten, wenn es zu einer, vorzugsweisen geringfügigen, Drehung der Antriebseinheit 3 im Zuge von deren Auslenkung kommt. In Fig. 3 ist die Längsachse 28 des inneren Elements 5 deckungsgleich mit der Längsachse 14 des äußeren Elements 6, weshalb diese nicht extra eingezeichnet ist. Die Verjüngung des lichten Querschnitts 13 erfolgt auch im Ausführungsbeispiel der Fig. 3 stufenweise. Insgesamt sind Stufen mit drei unterschiedlichen Größen des lichten Querschnitts 13 bzw. mit drei unterschiedlichen Abständen der Innenseite 12 von der Längsachse 14 erkennbar.

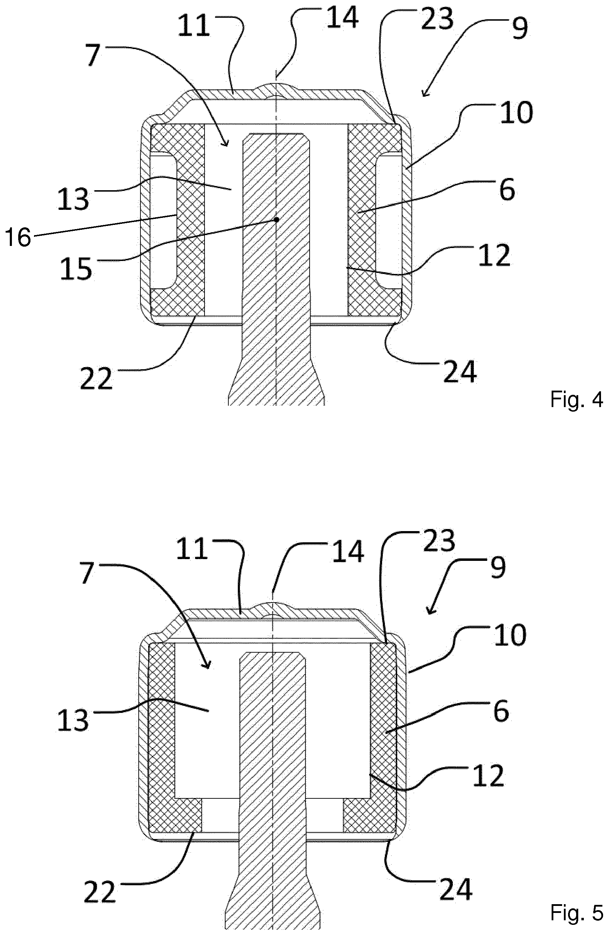

Eine Verjüngung des lichten Querschnitts 13 mit nur einer Stufe weist die Ausführungsform der Fig. 5 auf. Der lichte Querschnitt 13 weist dabei im Bereich eines der Kopfwand 11 gegenüberliegenden ersten Endes 22 des äußeren Elements 6 die geringste Größe auf und erweitert sich in Richtung zu einem dem ersten Ende 22 gegenüberliegenden zweiten Ende 23 des äußeren Elements 6, d.h. in Richtung zur Kopfwand 11 und parallel zur Längsachse 14. Jener Teil der Innenseite 12, der den lichten Querschnitt 13 mit der geringsten Größe begrenzt, erstreckt sich parallel zur Längsachse 14 nur über ca. 22% der gesamten Erstreckung des äußeren Elements 6 parallel zur Längsachse 14. Die resultierende Dämpfungscharakteristik ist gekennzeichnet durch ein sanftes Ansprechen und mäßiger Dämpfung bei Auslenkungen der Antriebseinheit 3, die zu einem ersten Kontakt des inneren Elements 5 mit der Innenseite 12 führen, und einem relativ abrupten Wechsel zu einer relativ starken Dämpfung und Begrenzung der Auslenkung, sobald das innere Element 5 weitere Teile der Innenseite 12 kontaktiert.

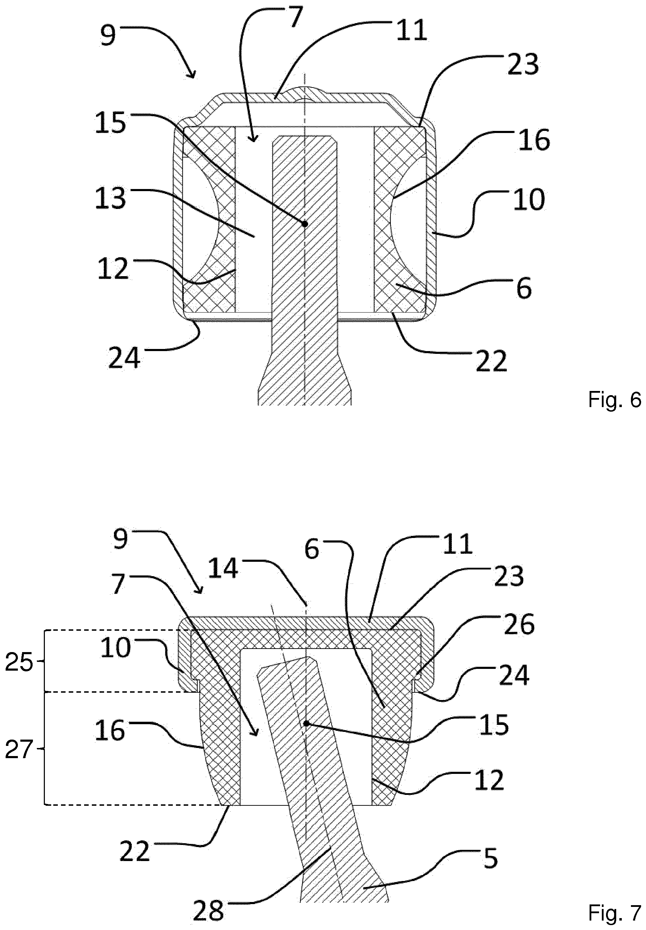

Die in Fig. 4 und Fig. 6 gezeigten Ausführungsformen sind Beispiele für einen lichten Querschnitt 13 der über die gesamte Erstreckung des äußeren Elements 6 parallel zur Längsachse 14 konstant ist. Um die Dämpfung nicht zu hart zu gestalten, liegt in diesen Fällen die Außenseite 16 nicht vollständig an der mindestens einen Seitenwand 10 an, sondern nur im Bereich des ersten Endes 22 und des zweiten Endes 23. Zwischen diesen Bereichen ist die Außenseite 16 von der mindestens einen Seitenwand 10 beabstandet. Im Falle der Ausführungsform der Fig. 4 ist diese Beabstandung stufenförmige ausgeführt, sodass der von der Seitenwand 10 beabstandete Teil der Außenwand 16 im Wesentlichen parallel zur Seitenwand 10 verläuft. Im Falle der Ausführungsform der Fig. 6 ist die Beabstandung durch eine von der Seitenwand 10 weg weisende Krümmung der Außenseite 16 realisiert.

In den Ausführungsformen von Fig. 2 bis Fig. 6 ist das äußere Element 6 in Richtung parallel zur Längsachse 14 zusätzlich durch einen Formschluss in der Kappe 9 gehalten. Einerseits kommt dieser Formschluss zustande, indem das äußere Element 6 mit seinem zweiten Ende 23 an der Kopfwand 11 der Kappe 9 anliegt. Andererseits weist die mindestens eine Seitenwand 10 einen der Kopfwand 11 gegenüberliegenden, umgebogenen Endbereich 24 auf, der zur Längsachse 14 hin umgebogen ist und an welchem das erste Ende 22 des äußeren Elements 6 abschnittsweise, mit einem an die Außenseite 16 anschließenden Bereich anliegt.

In der Ausführungsform der Fig. 7 ist das äußere Element 6 ebenfalls parallel zur Längsachse 14 formschlüssig in der Kappe 9 gehalten. Wiederum liegt das zweite Ende 23 an der Kopfwand 11 der Kappe 9 an. Das äußere Element 6 ist dabei im Bereich des zweiten Endes 23 durchgehend, ohne lichten Querschnitt 13 ausgeführt. Weiters überlappt die Außenseite 16 des äußeren Elements 6 mit der mindestens einen Seitenwand 10 parallel zur Längsachse 14 gesehen nur in einem beschränkten Bereich 25. Dieser Bereich 25 weist gegenüber einem daran anschließenden Bereich 27 des äußeren Elements 6, der parallel zur Längsachse 14 gesehen nicht mit der Seitenwand 10 überlappt, einen von der Längsachse 14 weg weisenden Vorsprung 26 auf. Mit diesem Vorsprung 26 kontaktiert das äußere Element 6 den umgebogenen Endbereich 24 der Seitenwand 10, wodurch der genannte Formschluss vervollständigt wird. Zusätzlich kann das äußere Element 6 an der Seitenwand 10 und/oder der Kopfwand 11 noch anderweitig fixiert sein, beispielsweise durch Verklebung.

Das äußere Element 6 weist sowohl im Bereich 25 als auch im Bereich 27 den lichten Querschnitt 13 auf. Hierdurch kann in bestimmten Situationen, insbesondere wenn die Längsachse 28 des inneren Elements 5, wie in Fig. 7 dargestellt, nicht parallel zur Längsachse 14 ausgerichtet ist, ein besonders weiches Ansprechverhalten der Dämpfung realisiert werden. Ab einer gewissen Größe der Auslenkungen der Antriebseinheit 3 kontaktiert das innere Element 5 das äußere Element 6 zunächst nur im Bereich 27, wodurch dieser Bereich 27 jedoch nicht gegen die Seitenwand 10 gedrückt, sondern nur elastisch verformt wird, was wiederum eine geringe Dämpfung der entsprechenden Auslenkung der Antriebseinheit 3 bewirkt. In weiterer Folge kann es bei noch größeren Auslenkungen dazu kommen, dass das innere Element 5 das äußere Element 6 dann auch im Bereich 25 kontaktiert und diesen unter elastischer Verformung gegen die Seitenwand 10 drückt, was zu einer stärkeren Dämpfung und einer stärkeren Begrenzung der Auslenkung der Antriebseinheit 3 führt. Insgesamt kann also wieder eine progressive Dämpfungscharakteristik erzielt werden.

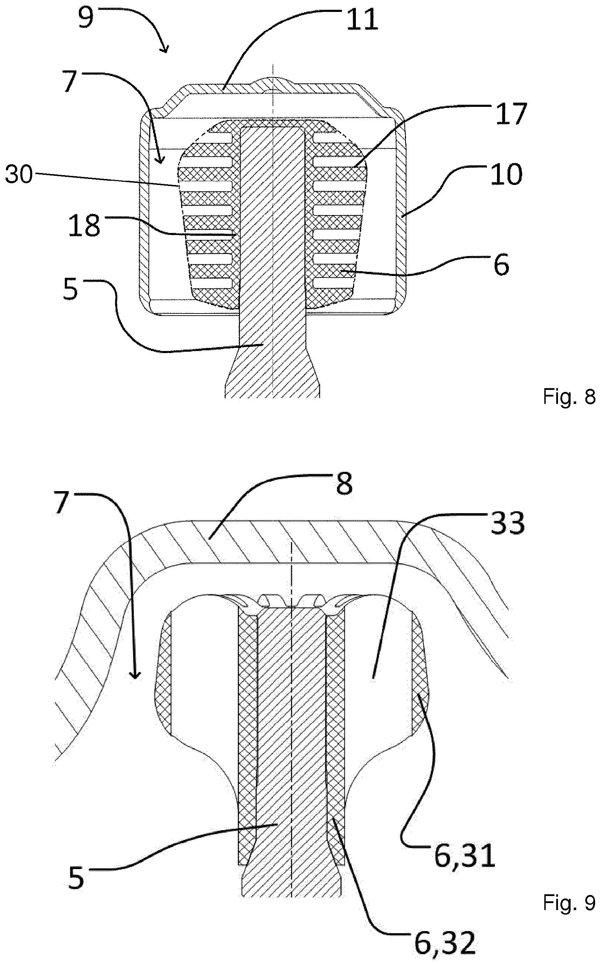

Fig. 8 zeigt eine Ausführungsform, bei welcher das äußere Element 6 am inneren Element 5 fixiert ist, beispielsweise durch Verklebung oder einen Presssitz. Um hierbei eine maximale Kontaktfläche zwischen den beiden Elementen 5, 6 zu gewährleisten, kontaktiert die gesamte Innenseite 12 des äußeren Elements 6 das innere Element 5. Neben dem sicheren Halt des äußeren Elements 6 am inneren Element 5 trägt dies zu einer sehr straken und effektiven Dämpfung der Auslenkung der Antriebseinheit 3 bei. Das mindestens eine Wandelement wird in der Ausführungsform der Fig. 8 jedoch weiterhin durch die Kopfwand 11 und die mindestens eine Seitenwand 10 der Kappe 9 ausgebildet.

Es sei bemerkt, dass auch Varianten möglich sind, bei denen das innere Element 5 und das äußere Element 6 einstückig und damit aus demselben Material gefertigt sind (nicht dargestellt). Das äußere Element 6 und das innere Element 5 weisen dann natürlich grundsätzlich dieselbe Steifigkeit auf.

Zur Erzielung einer progressiven Dämpfungscharakteristik weist das äußere Element 6 in der Ausführungsform der Fig. 8 Lamellen 17 auf. Diese Lamellen 17 stehen von einem Grundkörper 18 des äußeren Elements 6, vorzugsweise im rechten Winkel zur Längsachse 14, ab, wobei der Grundkörper 18 die Innenseite 12 aufweist. Zunächst findet bei hinreichend großen Auslenkungen der Antriebseinheit 3 eine elastische Verformung einzelner Lamellen 12 statt, womit ein sanftes Ansprechen der Dämpfung ermöglicht wird. Erst bei noch größeren Auslenkungen kann es zu einer elastischen Verformung des Grundkörpers 18 kommen, was eine stärkere Dämpfung bewirkt. Insgesamt kann somit wieder eine progressive Dämpfungscharakteristik erzielt werden. Dabei ist es zur Verstärkung der progressiven Dämpfungscharakteristik vorzugsweise vorgesehen, dass eine Einhüllende 30 (in Fig. 8 strichliert angedeutet) des äußeren Elements 6 zumindest abschnittsweise von der mindestens einen Seitenwand 10 weg weisend gekrümmt ist. Die Krümmung bewirkt, dass nicht alle Lamellen 17 gleichzeitig die Seitenwand 10 kontaktieren. Stattdessen kontaktieren mit immer größer werdender Auslenkung der Antriebseinheit 3 immer mehr Lamellen 17 sukzessive die Seitenwand 10.

Fig. 9 zeigt schließlich eine Ausführungsform, bei der das äußere Element 6 ebenfalls am inneren Element 5 fixiert ist. Auf eine Kappe 9 wird jedoch in diesem Fall verzichtet. Das mindestens eine Wandelement wird stattdessen durch die Gehäusewand 8 ausgebildet. Die Gehäusewand 8 ist entsprechend geeignet geformt, um das Bewegungsvolumen 7 zumindest abschnittsweise zu begrenzen.

Im Ausführungsbeispiel der Fig. 9 ist das äußere Element 6 nicht voll ausgeführt. Stattdessen weist das äußere Element 6 eine innere Wand 32 auf, welche wiederum die am inneren Element 5 anliegende Innenseite 12 aufweist. Weiters weist das äußere Element 6 eine äußere Wand 31 auf, mit der das äußere Element 6 im zweiten Zustand der Antriebseinheit 3 die Gehäusewand 8 kontaktiert. Zwischen den beiden Wänden 31, 32 ist eine Aussparung 33 des äußeren Elements 6 vorgesehen ist. Die Aussparung 33 erleichtert die Verformung des äußeren Elements 6 im Bereich von dessen äußerer Wand 32 im zweiten Zustand der Antriebseinheit 3, was eine weichere Dämpfung ermöglicht. Weiters trägt die Aussparung zur Reduzierung der Masse des äußeren Elements 6 sowie generell zur Materialeinsparung bei.

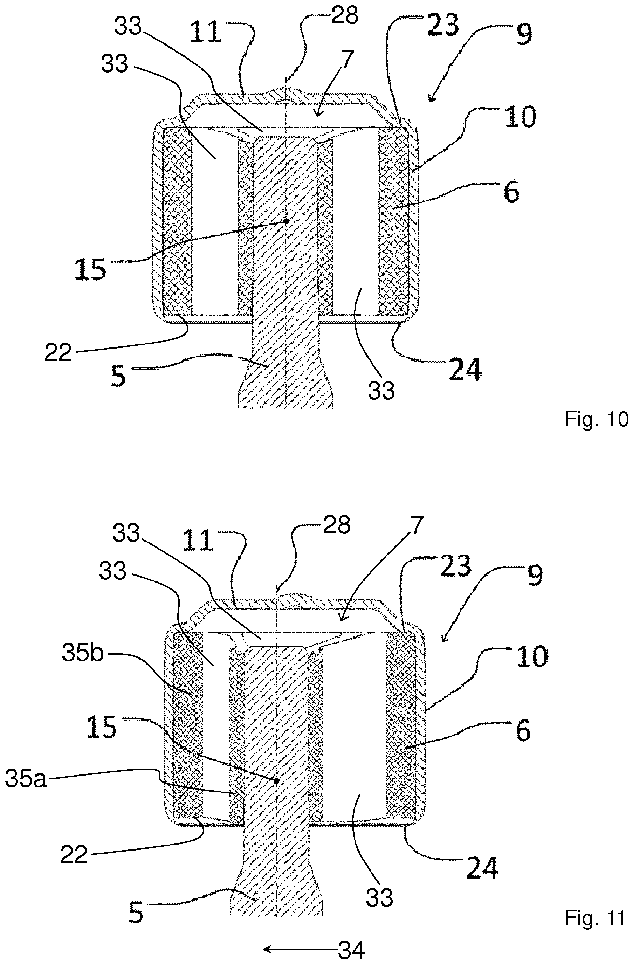

Auch im Ausführungsbeispiel der Fig. 10 und Fig. 11 ist das äußere Element 6 nicht voll ausgeführt, sondern weist Aussparungen 33 auf, die eine Verformung des äußeren Elements 6 erleichtern. Dabei ist das äußere Element 6 sowohl am inneren Element 5 als auch an der Seitenwand 10 der Kappe 9 befestigt. Die Seitenwand 10 und die Kopfwand 11 der Kappe 9 begrenzen das Bewegungsvolumen 7 zumindest abschnittsweise. Fig. 10 zeigt den nicht ausgelenkten Zustand. Aufgrund der Aussparungen 33 sind zumindest kleine Bewegungen des inneren Elements 5 - unter bloß geringfügiger elastischer Verformung des äußeren Elements 6 im Bereich des inneren Elements 5 - möglich, ohne dass es zu einem merklichen Drücken gegen die Seitenwand 10 kommt.

Fig. 11 stellt einen zweiten, deutlich ausgelenkten Zustand dar, in welchem das innere Element 5 unter Zwischenlage und elastischer Verformung des äußeren Elements 6 gegen die Seitenwand 10 drückt. Dabei ist die in Fig. 11 dargestellte Auslenkung des ersten Elements 5 derart, dass dessen Längsachse 28 gegenüber dem nicht ausgelenkten Zustand lediglich in einer Auslenkungsrichtung 34 parallel verschoben ist. Selbstverständlich sind aber ebenfalls Auslenkungen möglich, bei denen die Längsachse 28 gegenüber dem nicht ausgelenkten Zustand auch verkippt ist.

Durch die Aussparungen 33 kann im zweiten Zustand ein progressives Dämpfungsverhalten erzielt werden, wenn zunächst, wie in Fig. 11 gezeigt, trotz deutlicher Auslenkung Abschnitte 35a, 35b des äußeren Elements 6, die in Auslenkungsrichtung 34 gesehen hintereinander angeordnet sind, noch durch eine Aussparung 33 voneinander getrennt sind. Bei noch größerer Auslenkung in Auslenkungsrichtung 34 kommt es zu einer Berührung der Abschnitte 35a, 35b. Nochmals größere Auslenkungen in Auslenkungsrichtung 34 benötigen sodann deutlich höhere Kräfte, um weitere (elastische) Verformungen des äußeren Elements 6 zu ermöglichen, wodurch eine progressive Dämpfungscharakteristik gegeben ist.

### BEZUGSZEICHENLISTE

- 1: Kältemittelverdichter
- 2: Gehäuse
- 3: Antriebseinheit
- 4: Dämpfungsvorrichtung
- 5: Inneres Element
- 6: Äußeres Element
- 7: Bewegungsvolumen
- 8: Gehäusewand
- 9: Kappe
- 10: Seitenwand der Kappe
- 11: Kopfwand der Kappe
- 12: Innenseite des äußeren Elements
- 13: Lichter Querschnitt des äußeren Elements
- 14: Längsachse des äußeren Elements
- 15: Zentrum des äußeren Elements
- 16: Außenseite des äußeren Elements
- 17: Lamelle
- 18: Grundkörper des äußeren Elements
- 19: Metallfeder
- 20: Federelement
- 21: Block der Antriebseinheit
- 22: Erstes Ende des äußeren Elements
- 23: Zweites Ende des äußeren Elements
- 24: Umgebogener Endbereich der Seitenwand
- 25: Mit der Seitenwand überlappender Bereich des äußeren Elements
- 26: Vorsprung des mit der Seitenwand überlappenden Bereichs des äußeren Elements
- 27: Nicht mit der Seitenwand überlappender Bereich des äußeren Elements
- 28: Längsachse des inneren Elements
- 29: Bolzen
- 30: Einhüllende des äußeren Elements
- 31: Äußere Wand des äußeren Elements
- 32: Innere Wand des äußeren Elements
- 33: Aussparung des äußeren Elements
- 34: Auslenkungsrichtung
- 35a, 35b: Abschnitt des äußeren Elements

## Patentansprüche

1. Kältemittelverdichter (1) umfassend ein hermetisch dichtes Gehäuse (2) sowie eine im Inneren des Gehäuses (2) angeordnete Antriebseinheit (3) mit einer Kolben-Zylinder-Einheit zur zyklischen Verdichtung eines Kältemittels und einem Elektromotor zum Antrieb der Kolben-Zylinder-Einheit, wobei eine Dämpfungsvorrichtung (4) zur Dämpfung und Begrenzung einer Auslenkung der Antriebseinheit (3) im Inneren des Gehäuses (2) vorgesehen ist, die Dämpfungsvorrichtung (4) umfassend ein inneres Element (5), welches mit der Antriebseinheit (3) verbunden ist, und ein äußeres Element (6), welches das innere Element (5) umgibt, wobei im Gehäuse (2) ein durch mindestens ein Wandelement (8, 10, 11) zumindest abschnittsweise begrenztes Bewegungsvolumen (7) vorgesehen ist, in welchem das innere Element (5) und das äußere Element (6) angeordnet sind, wobei in einem ersten Zustand der Antriebseinheit (3) zumindest das innere Element (5) im Bewegungsvolumen (7) bewegbar ist und wobei in einem zweiten, ausgelenkten Zustand der Antriebseinheit (3) das innere Element (5) unter Zwischenlage und elastischer Verformung des äußeren Elements (6) gegen das mindestens eine Wandelement (8, 10, 11) gedrückt ist, **dadurch gekennzeichnet, dass** das äußere Element (6) aus einem Polymerwerkstoff oder vulkanisiertem Kautschuk gefertigt ist.

2. Kältemittelverdichter (1) nach Anspruch 1, **dadurch gekennzeichnet, dass** das mindestens eine Wandelement (10, 11) Teil einer im Gehäuse (2) angeordneten und mit diesem starr verbundenen Kappe (9) ist.

3. Kältemittelverdichter (1) nach Anspruch 2, **dadurch gekennzeichnet, dass** das äußere Element (6) am mindestens einen Wandelement (10, 11) fixiert ist.

4. Kältemittelverdichter (1) nach Anspruch 3, **dadurch gekennzeichnet, dass** das äußere Element (6) eine dem inneren Element (5) zugewandte Innenseite (12) aufweist, die einen lichten Querschnitt (13) des äußeren Elements (6) begrenzt, und dass sich der lichte Querschnitt (13) parallel zu einer Längsachse (14) des äußeren Elements (6) gesehen zumindest abschnittsweise verjüngt.

5. Kältemittelverdichter (1) nach Anspruch 4, **dadurch gekennzeichnet, dass** sich der lichte Querschnitt (13) parallel zur Längsachse (14) und in Richtung eines auf der Längsachse (14) liegenden Zentrums (15) des äußeren Elements (6) gesehen verjüngt und in entgegengesetzter Richtung gesehen vergrößert.

6. Kältemittelverdichter (1) nach einem der Ansprüche 4 bis 5, **dadurch gekennzeichnet, dass** sich der lichte Querschnitt (13) stufenweise verjüngt.

7. Kältemittelverdichter (1) nach einem der Ansprüche 3 bis 6, **dadurch gekennzeichnet, dass** das äußere Element (6) eine das innere Element (5) abschnittsweise umgebende und dem inneren Element (5) abgewandte Außenseite (16) aufweist, welche zumindest abschnittsweise am mindestens einen Wandelement (10, 11) fixiert ist.

8. Kältemittelverdichter (1) nach einem der Ansprüche 2 bis 7, **dadurch gekennzeichnet, dass** das äußere Element (6) eine das innere Element (5) abschnittsweise umgebende und dem inneren Element (5) abgewandte Außenseite (16) aufweist, welche Außenseite (16) im ersten Zustand der Antriebseinheit (3) das mindestens eine Wandelement (10) abschnittsweise kontaktiert und abschnittsweise vom mindestens einen Wandelement (10) beabstandet ist.

9. Kältemittelverdichter (1) nach Anspruch einem der Ansprüche 2 bis 8, **dadurch gekennzeichnet, dass** das äußere Element (6) eine das innere Element (5) abschnittsweise umgebende und dem inneren Element (5) abgewandte Außenseite (16) aufweist, welche Außenseite (16) mit dem mindestens einen Wandelement (10, 11) parallel zur Längsachse (14) gesehen nur abschnittsweise überlappt.

10. Kältemittelverdichter (1) nach Anspruch 1, **dadurch gekennzeichnet, dass** das mindestens eine Wandelement Teil einer Gehäusewand (8) des Gehäuses (2) ist.

11. Kältemittelverdichter (1) nach einem der Ansprüche 1, 2 oder 10, **dadurch gekennzeichnet, dass** das äußere Element (6) am inneren Element (5) fixiert ist.

12. Kältemittelverdichter (1) nach Anspruch 11, **dadurch gekennzeichnet, dass** das äußere Element (6) eine dem inneren Element (5) zugewandte Innenseite (12) aufweist, welche vollständig vom inneren Element (5) kontaktiert ist.

13. Kältemittelverdichter (1) nach einem der Ansprüche 11 bis 12, **dadurch gekennzeichnet, dass** das äußere Element (6) Lamellen (17) aufweist, welche im zweiten Zustand der Antriebseinheit (3) das mindestens eine Wandelement (8) kontaktieren.

14. Kältemittelverdichter nach Anspruch 13, **dadurch gekennzeichnet, dass** die Lamellen (17) normal zur Längsachse (14) von einem Grundkörper (18) des äußeren Elements (6) abstehen.

15. Kältemittelverdichter (1) nach einem der Ansprüche 11 bis 14, **dadurch gekennzeichnet, dass** das äußere Element (6) und das innere Element (5) einstückig ausgeführt sind.

16. Kältemittelverdichter (1) nach einem der Ansprüche 1 bis 14, **dadurch gekennzeichnet, dass** das äußere Element (6) einstückig ausgeführt ist.

17. Kältemittelverdichter (1) nach einem der Ansprüche 1 bis 14 oder 16, **dadurch gekennzeichnet, dass** das innere Element (5) aus Metall gefertigt ist.

## Claims

1. Refrigerant compressor (1) comprising a hermetically sealed housing (2) and a drive unit (3) disposed in the interior of the housing (2), having a piston/cylinder unit for cyclical compression of a refrigerant, and an electric motor for drive of the piston/cylinder unit, wherein a damping apparatus (4) for damping and limiting a deflection of the drive unit (3) is provided in the interior of the housing (2), the damping apparatus (4) comprising an inner element (5), which is connected with the drive unit (3), and an outer element (6), which surrounds the inner element (5), wherein a movement volume (7) that is limited, at least in certain sections, by means of at least one wall element (8, 10, 11), is provided in the housing (2), in which movement volume (7) the inner element (5) and the outer element (6) are disposed, wherein in a first state of the drive unit (3), at least the inner element (5) can be moved in the movement volume (7), and wherein in a second, deflected state of the drive unit (3), the inner element (5) is pressed against the at least one wall element (8, 10, 11), with interposition and elastic deformation of the outer element (6), **characterized in that** the outer element (6) is produced from a polymer material or vulcanized rubber.

2. Refrigerant compressor (1) according to claim 1, **characterized in that** the at least one wall element (10, 11) is part of a cap (9) disposed in the housing (2) and rigidly connected with the latter.

3. Refrigerant compressor (1) according to claim 2, **characterized in that** the outer element (6) is fixed on the at least one wall element (10, 11).

4. Refrigerant compressor (1) according to claim 3, **characterized in that** the outer element (6) has an inner side (12) that faces the inner element (5), which inner side delimits a clear cross-section (13) of the outer element (6), and that the clear cross-section (13) narrows, at least in certain sections, viewed parallel to a longitudinal axis (14) of the outer element (6).

5. Refrigerant compressor (1) according to claim 4, **characterized in that** the clear cross-section (13) narrows, viewed parallel to the longitudinal axis (14) and in the direction of a center (15) of the outer element (6) that lies on the longitudinal axis (14), and increases in size in the opposite direction.

6. Refrigerant compressor (1) according to one of claims 4 to 5, **characterized in that** the clear cross-section (13) narrows in steps.

7. Refrigerant compressor (1) according to one of claims 3 to 6, **characterized in that** the outer element (6) has an outer side (16) that surrounds the inner element (5), in certain sections, and faces away from the inner element (5), which outer side is fixed, at least in certain sections, on the at least one wall element (10, 11).

8. Refrigerant compressor (1) according to one of claims 2 to 7, **characterized in that** the outer element (6) has an outer side (16) that surrounds the inner element (5), in certain sections, and faces away from the inner element (5), which outer side (16) contacts the at least one wall element (10) in certain sections, in the first state of the drive unit (3), and is spaced apart from the at least one wall element (10), in certain sections.

9. Refrigerant compressor (1) according to claim one of claims 2 to 8, **characterized in that** the outer element (6) has an outer side (16) that surrounds the inner element (5) in certain sections, and faces away from the inner element (5), which outer side (16) overlaps with the at least one wall element (10, 11), viewed parallel to the longitudinal axis (14), only in certain sections.

10. Refrigerant compressor (1) according to claim 1, **characterized in that** the at least one wall element is part of a housing wall (8) of the housing (2).

11. Refrigerant compressor (1) according to one of claims 1, 2 or 10, **characterized in that** the outer element (6) is fixed on the inner element (5).

12. Refrigerant compressor (1) according to claim 11, **characterized in that** the outer element (6) has an inner side (12) that faces the inner element (5), which inner side is completely contacted by the inner element (5).

13. Refrigerant compressor (1) according to one of claims 11 to 12, **characterized in that** the outer element (6) has lamellae (17) that contact the at least one wall element (8) in the second state of the drive unit (3).

14. Refrigerant compressor (1) according to claim 13, **characterized in that** the lamellae (17) project from a basic body (18) of the outer element (6) normal to the longitudinal axis (14).

15. Refrigerant compressor (1) according to one of claims 11 to 14, **characterized in that** the outer element (6) and the inner element (5) are made in one piece.

16. Refrigerant compressor (1) according to one of claims 1 to 14, **characterized in that** the outer element (6) is made in one piece.

17. Refrigerant compressor (1) according to one of claims 1 to 14 or 16, **characterized in that** the inner element (5) is produced from metal.

## Revendications

1. Compresseur de réfrigérant (1) comprenant un boîtier (2) scellé hermétiquement ainsi qu'une unité d'entraînement (3) disposée à l'intérieur du boîtier (2) avec une unité cylindre-piston destinée à la compression cyclique d'un réfrigérant et un moteur électrique destiné à l'entraînement de l'unité cylindre-piston, un dispositif d'amortissement (4) destiné à l'amortissement et à la limitation d'une déviation de l'unité d'entraînement (3) étant prévue à l'intérieur du boîtier (2), le dispositif d'amortissement (4) comprenant un élément intérieur (5), lequel est connecté à l'unité d'entraînement (3), et un élément extérieur (6), lequel entoure l'élément intérieur (5), un volume de mouvement (7) limité du moins par portion par au moins un élément mural (8, 10, 11) étant prévu dans le boîtier (2) dans lequel l'élément intérieur (5) et l'élément extérieur (6) sont disposés, dans un premier état de l'unité d'entraînement (3) au moins l'élément intérieur (5) étant mobile dans le volume de mouvement (7) et dans un deuxième état de déviation de l'unité d'entraînement (3) l'élément intérieur (5) est pressé contre l'au moins un élément mural (8, 10, 11) sous la couche intermédiaire et la déformation élastique de l'élément extérieur (6), **caractérisé en ce que** l'élément extérieur (6) est fabriqué en matériau polymère ou un caoutchouc vulcanisé.

2. Compresseur de réfrigérant (1) selon la revendication 1, **caractérisé en ce que** l'au moins un élément mural (10, 11) est une partie d'un couvercle (9) disposé dans le boîtier (2) et relié rigidement à celui-ci.

3. Compresseur de réfrigérant (1) selon la revendication 2, **caractérisé en ce que** l'élément extérieur (6) est fixé à l'au moins un élément mural (10, 11).

4. Compresseur de réfrigérant (1) selon la revendication 3, **caractérisé en ce que** l'élément extérieur (6) présente une face intérieure (12) orientée vers l'élément intérieur (5), la face intérieure limitant une section transversale libre (13) de l'élément extérieur (6), et que la section transversale libre (13) diminue du moins par portion vue parallèlement à un axe longitudinal (14) de l'élément extérieur (6).

5. Compresseur de réfrigérant (1) selon la revendication 4, **caractérisé en ce que** la section transversale libre (13) diminue vue parallèlement à l'axe longitudinal (14) et dans la direction d'un centre (15) situé sur l'axe longitudinal (14) de l'élément extérieur (6) et s'agrandit vue dans la direction opposée.

6. Compresseur de réfrigérant (1) selon l'une quelconque des revendications 4 à 5, **caractérisé en ce que** la section transversale libre (13) diminue par étape.

7. Compresseur de réfrigérant (1) selon l'une quelconque des revendications 3 à 6, **caractérisé en ce que** l'élément extérieur (6) présente une face extérieure (16) entourant par portion l'élément intérieur (5) et opposée à l'élément intérieur (5), ladite face extérieure étant fixée à l'au moins un élément mural (10, 11) du moins par portion.

8. Compresseur de réfrigérant (1) selon l'une quelconque des revendications 2 à 7, **caractérisé en ce que** l'élément extérieur (6) présente une face extérieure (16) entourant par portion l'élément intérieur (5) et opposée à l'élément intérieur (5), ladite face extérieure (16) touchant par portion l'au moins un élément mural (10) dans le premier état de l'unité d'entraînement (3) et étant espacée par portion d'au moins un élément mural (10).

9. Compresseur de réfrigérant (1) selon l'une quelconque des revendications 2 à 8, **caractérisé en ce que** l'élément extérieur (6) présente une face extérieure (16) entourant par portion l'élément intérieur (5) et opposée à l'élément intérieur (5), ladite face extérieure (16) chevauchant seulement par portion avec l'au moins un élément mural (10, 11) vue parallèlement à l'axe longitudinal (14).

10. Compresseur de réfrigérant (1) selon la revendication 1, **caractérisé en ce que** l'au moins un élément mural est une partie d'une paroi de boîtier (8) du boîtier (2).

11. Compresseur de réfrigérant (1) selon l'une quelconque des revendications 1, 2 ou 10, **caractérisé en ce que** l'élément extérieur (6) est fixé à l'élément intérieur (5).

12. Compresseur de réfrigérant (1) selon la revendication 11, **caractérisé en ce que** l'élément extérieur (6) présente une face intérieure (12) orientée vers l'élément intérieur (5), ladite face intérieure étant touchée entièrement par l'élément intérieur (5).

13. Compresseur de réfrigérant (1) selon l'une quelconque des revendications 11 à 12, **caractérisé en ce que** l'élément extérieur (6) présente des lamelles (17) qui touchent l'au moins un élément mural (8) dans le deuxième état de l'unité d'entraînement (3).

14. Compresseur de réfrigérant (1) selon la revendication 13, **caractérisé en ce que** les lamelles (17) dépassent d'un corps de base (18) de l'élément extérieur (6) normalement par rapport à l'axe longitudinal (14).

15. Compresseur de réfrigérant (1) selon l'une quelconque des revendications 11 à 14, **caractérisé en ce que** l'élément extérieur (6) et l'élément intérieur (5) sont réalisés en une seule pièce.

16. Compresseur de réfrigérant (1) selon l'une quelconque des revendications 1 à 14, **caractérisé en ce que** l'élément extérieur (6) est réalisé en une seule pièce.

17. Compresseur de réfrigérant (1) selon l'une quelconque des revendications 1 à 14 ou 16, **caractérisé en ce que** l'élément intérieur (5) est en métal.
